# EUROPEAN PATENT APPLICATION

(11) **EP 4 745 724 A1**
(43) Date of publication of application: **20.05.2026**
(21) Application number: 25216154.2
(22) Date of filing: 17.11.2025
(51) Int. Cl.: G06F 3/01, G09B 9/05

(54) **METHOD FOR SIMULATING REAL VEHICLE OPERATION**

(30) Priority: 19.11.2024 CN 202411659175
(71) Applicant: AUMOVIO Germany GmbH, 60488 Frankfurt am Main (DE)
(72) Inventor: Ye, Qingbo, Wuhu, Anhui, 241009 (CN); Yang, Tao, Wuhu, Anhui, 241009 (CN)
(74) Representative: Aumovio Corporation

(57) **Abstract**

The present disclosure provides a method for simulating real-vehicle operation, an electronic device, and a storage medium. The specific implementation solution involves: determining (S101), by a vehicle-mounted HPC in response to a first interaction instruction sent by a first VR device, a driving scene to be fed back to a user by the first VR device, where the vehicle-mounted HPC is configured to control operations of vehicle functions of a real vehicle on which the vehicle-mounted HPC is mounted; determining (S102), by the vehicle-mounted HPC according to the driving scene, feedback information to be generated in response to the driving scene; and sending (S103), by the vehicle-mounted HPC, a second interaction instruction to a corresponding second VR device according to a feedback manner and a feedback content of the feedback information, where the second interaction instruction is used to control the second VR device to simulate real-vehicle operation for the user based on the driving scene, and the second VR device includes at least the first VR device. According to the solution of the present disclosure, by utilizing VR devices to interact with a vehicle-mounted HPC physically mounted on a real vehicle, a user is enabled to experience realistic real-vehicle driving and riding operation with the aid of the VR devices even without driving the real vehicle.

## Description

### Technical Field

The present disclosure relates to the field of computer technologies, and in particular, to a method for simulating real-vehicle operation, an electronic device, and a storage medium.

### Background

Virtual reality (VR) technology is a computer simulation system that can create and provide experience in a virtual world. It generates a simulated environment using a computer, immersing users into the environment. The virtual reality technology uses electronic signals generated from real-life data through computer technologies and combines them with various output devices to transform them into phenomena perceivable by people. These phenomena may be tangible objects in reality or substances invisible to the naked eyes, which are presented through three-dimensional models. Virtual reality devices possess perceptual functions that humans have, such as auditory, visual, tactile, and other perceptual systems. They feature a super powerful simulation system, truly achieving human-computer interactions, enabling people to operate freely and obtain the most realistic feedback from the environment during operation.

### Summary of the Invention

The present disclosure provides a method for simulating real-vehicle operation, an electronic device, and a storage medium, so as to solve or alleviate one or more technical problems in the existing technology.

In an aspect, the present disclosure provides a method for simulating real-vehicle operation, including:
determining, by a vehicle-mounted HPC in response to a first interaction instruction sent by a first VR device, a driving scene to be fed back to a user by the first VR device, where the vehicle-mounted HPC is configured to control operations of vehicle functions of a real vehicle on which the vehicle-mounted HPC is mounted;
determining, by the vehicle-mounted HPC according to the driving scene, feedback information to be generated in response to the driving scene; and
sending, by the vehicle-mounted HPC, a second interaction instruction to a corresponding second VR device according to a feedback manner and a feedback content of the feedback information, where the second interaction instruction is used to control the second VR device to simulate real-vehicle operation for the user based on the driving scene, and the second VR device includes at least the first VR device.

In another aspect, the present disclosure provides a method for simulating real-vehicle operation, including:
sending, by a first VR device, a first interaction instruction to a vehicle-mounted HPC, where the first interaction instruction is used to cause the vehicle-mounted HPC to determine, according to a driving scene corresponding to the first interaction instruction, feedback information to be generated in response to the driving scene; and
simulating, by the first VR device according to a second interaction instruction sent by the vehicle-mounted HPC, real-vehicle operation for a user based on the driving scene, where the second interaction instruction is generated based on a feedback manner and a feedback content of the feedback information.

In another aspect, the present disclosure provides a vehicle-mounted HPC, including:
a first determination module configured to determine, in response to a first interaction instruction sent by a first VR device, a driving scene to be fed back to a user by the first VR device, where the vehicle-mounted HPC is configured to control operations of vehicle functions of a real vehicle on which the vehicle-mounted HPC is mounted;
a second determination module configured to determine, according to the driving scene, feedback information to be generated in response to the driving scene; and
a first sending module configured to send a second interaction instruction to a corresponding second VR device according to a feedback manner and a feedback content of the feedback information, where the second interaction instruction is used to control the second VR device to simulate real-vehicle operation for the user based on the driving scene, and the second VR device includes at least the first VR device.

In another aspect, the present disclosure provides a VR device, including:
a second sending module configured to send a first interaction instruction to a vehicle-mounted HPC, where the first interaction instruction is used to cause the vehicle-mounted HPC to determine, according to a driving scene corresponding to the first interaction instruction, feedback information to be generated in response to the driving scene; and
a simulation module configured to simulate, according to a second interaction instruction sent by the vehicle-mounted HPC, real-vehicle operation for a user based on the driving scene, where the second interaction instruction is generated based on a feedback manner and a feedback content of the feedback information.

In another aspect, the present disclosure provides an electronic device, including:
at least one processor; and
a memory communicatively connected to the at least one processor.

The memory stores instructions executable by the at least one processor, where the instructions, when executed by the at least one processor, enable the at least one processor to perform the method according to any embodiment of the present disclosure.

In another aspect, the present disclosure provides a non-transitory computer-readable storage medium storing computer instructions, where the computer instructions are used to enable the computer to perform the method according to any embodiment of the present disclosure.

In another aspect, the present disclosure provides a computer program product including a computer program, where the computer program, when executed by a processor, implements the method according to any embodiment of the present disclosure.

According to the solution of the present disclosure, by utilizing VR devices to interact with a vehicle-mounted HPC physically mounted on a real vehicle, a user is enabled to experience realistic real-vehicle driving and riding operation with the aid of the VR devices even without driving the real vehicle.

It is to be understood that the content described in this section is not intended to identify key or important features of the embodiments of the present disclosure, nor is it intended to limit the scope of the present disclosure. Other features of the present disclosure will become readily understandable through the following specification.

### Brief Description of the Drawings

In the drawings, unless otherwise specified, the same reference numerals throughout multiple drawings refer to the same or similar components or elements. These drawings are not necessarily drawn to scale. It is to be understood that these drawings depict only some of the implementations provided in accordance with the present disclosure and are not to be considered as limiting the scope of the present disclosure.
FIG. 1 is a schematic flowchart of a method for simulating real-vehicle operation according to an embodiment of the present disclosure.
FIG. 2 is a schematic application diagram of a method for simulating real-vehicle operation according to an embodiment of the present disclosure.
FIG. 3 is a schematic flowchart of a method for simulating real-vehicle operation according to an embodiment of the present disclosure.
FIG. 4 is a schematic diagram of vehicle-mounted HPC according to an embodiment of the present disclosure.
FIG. 5 is a schematic diagram of a VR device according to an embodiment of the present disclosure.
FIG. 6 is a block diagram of an electronic device for implementing a method for simulating real-vehicle operation according to an embodiment of the present disclosure.

### Detailed Description

The present disclosure will be described in further detail below with reference to the accompanying drawings. The same reference numerals in the drawings indicate elements having the same or similar functions. While the various aspects of the embodiments are illustrated in drawings, the drawings are not necessarily drawn to scale unless specifically indicated.

Moreover, in order to better illustrate the present disclosure, numerous specific details are provided in the following detailed description. It is to be understood by those skilled in the art that the present disclosure may be implemented without some of the specific details. In some instances, methods, means, elements, circuits, and the like well known to those skilled in the art are not described in detail in order to highlight the main points of the present disclosure.

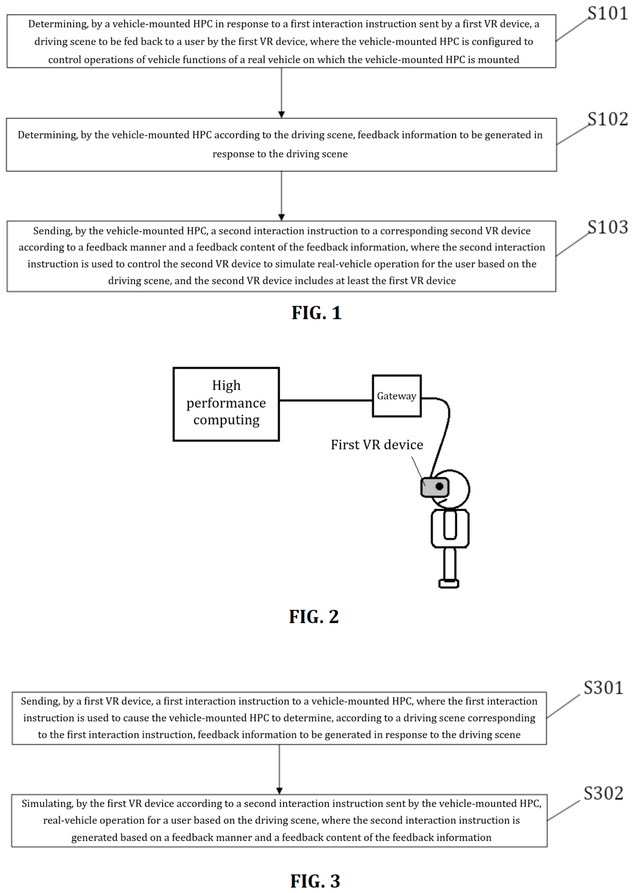

As shown in FIG. 1, an embodiment of the present disclosure provides a method for simulating real-vehicle operation, including the following steps:
step S101: determining, by a vehicle-mounted high performance computing (HPC) in response to a first interaction instruction sent by a first VR device, a driving scene to be fed back to a user by the first VR device, where the vehicle-mounted HPC is configured to control operations of vehicle functions of a real vehicle on which the vehicle-mounted HPC is mounted;
step S102: determining, by the vehicle-mounted HPC according to the driving scene, feedback information to be generated in response to the driving scene;
step S103: sending, by the vehicle-mounted HPC, a second interaction instruction to a corresponding second VR device according to a feedback manner and a feedback content of the feedback information, where the second interaction instruction is used to control the second VR device to simulate real-vehicle operation for the user based on the driving scene, and the second VR device includes at least the first VR device.

According to embodiments of the present disclosure, it should be noted that: The vehicle-mounted HPC in any embodiment of the present disclosure is physically mounted and used in a real vehicle. When it is mounted on the real vehicle, based on instructions of the user for the real vehicle, it can control the real vehicle to implement various vehicle functions. The implementable vehicle functions include, but are not limited to, controlling a vehicle-mounted display screen or head-up display to display images, controlling steering wheel vibration, controlling seat vibration and tightening a seat belt, and controlling the vehicle to implement an advanced driving assistance system (ADAS) function.

The first VR device may be understood as VR glasses, VR glasses and VR gloves, VR glasses and a control handle, and the like. By wearing the first VR device, the user can see a virtual scene of a vehicle interior and can send the first interaction instruction to the vehicle-mounted HPC through the first VR device. The user can send the first interaction instruction based on the first VR device through voice, button presses, head and eye gestures.

The driving scene may include various operations performed by the user on the vehicle interior while driving the real vehicle, for example, controlling the vehicle to use the vehicle-mounted display screen or head-up display for navigation, controlling the vehicle to perform autonomous driving, controlling the vehicle to perform assisted driving, and the like.

The feedback information may be understood as information displayed on a target vehicle-mounted device of the vehicle based on the driving scene during normal driving of the real vehicle. For example, when the driving scene is navigation, the feedback information includes a navigation scene presented on the vehicle-mounted display screen or head-up display (i.e., the target vehicle-mounted device) and a voice navigation sound emitted by the a vehicle-mounted sound system (i.e., the target vehicle-mounted device). When the driving scene is assisted driving, the feedback information includes navigation information and surrounding vehicle information presented on the vehicle-mounted display screen or head-up display, and further includes vibration feedback information of the steering wheel (i.e., the target vehicle-mounted device) or display information of a rearview mirror (i.e., the target vehicle-mounted device) when the user crosses a lane line. When the driving scene is a vehicle emergency braking scene, the feedback information includes brake warning information presented on the vehicle-mounted display screen or head-up display, and includes vibration information of the seat (i.e., the target vehicle-mounted device) or tightening information of the seat belt (i.e., the target vehicle-mounted device), or the like.

The feedback manner may be understood as a manner in which the target vehicle-mounted device responds to the feedback information. It includes, but is not limited to, image, sound, vibration, somatosensory feedback, and the like.

The feedback content may be understood as specific information displayed by the target vehicle-mounted device.

The second VR device includes, but is not limited to, at least one of VR glasses, VR gloves, a steering wheel, and a seat. The second VR device is a device externally connected to the vehicle-mounted HPC and configured for the user to simulate real-vehicle operation. The user can experience the simulated operation of the real vehicle by wearing or touching the relevant second VR device.

The selection of the second VR device depends on the feedback information. For example, after the user sends the first interaction instruction through the VR glasses (the first VR device), if the feedback information simultaneously includes image feedback, sound feedback, and somatosensory feedback, the second VR device needs to be selected as the vehicle-mounted display screen, the vehicle-mounted sound system, the vibratable steering wheel, or the tightenable seat belt.

According to the technique of the embodiments of the present disclosure, by utilizing VR devices to interact with a vehicle-mounted HPC physically mounted on a real vehicle, a user is enabled to experience real-vehicle driving and riding operation, which is provided by the feedback information truly fed back by the vehicle-mounted HPC, with the aid of the VR devices even without driving the real vehicle. When automotive component suppliers have not yet completed the manufacturing of components or when vehicle OEMs have not yet produced vehicles, users can still experience real feedback from real components or vehicles in the earliest stage through interactions between VR devices and vehicle-mounted HPCs pre-installed in the components or vehicles. Thus, during demonstration of components or vehicle functions to users, there is no need to place large-sized components or vehicles on site. The components or vehicle functions can be demonstrated through the carried vehicle-mounted HPCs and the VR devices. For example, a vehicle-mounted display screen supplier can demonstrate the latest instrument software to the user by carrying only the vehicle-mounted HPC, without carrying the vehicle-mounted display screen, dedicated wiring harnesses, etc., and nor requiring professional personnel to assist in setting up a test bench, thereby greatly reducing the costs of communication between the supplier or vehicle OEM and the user. Meanwhile, using VR devices as a medium for feeding back the feedback information by the real vehicle based on the driving scene enables the user to experience a response of the real vehicle to the driving scene, such that the user can experience a real vehicle driving process based on virtual reality and the real vehicle data fed back by the vehicle-mounted HPC.

In one example, if a customer needs to experience the effect of a pre-collision system of the vehicle, the first interaction instruction corresponding to the driving scene may be send to the vehicle-mounted HPC through the first VR device, and then the vehicle-mounted HPC sends the response feedback information to the second VR device, thereby enabling the user to experience, based on a plurality of different VR devices, a simulated real-vehicle operation process of the real vehicle for a pre-collision driving scene, such as alarm light flashing and alarm sound on the vehicle-mounted display screen, steering wheel vibration, or seat belt tightening. This allows the user to experience active safety functions of the vehicle without endangering their own safety. Moreover, since the user's experience originates directly from the vehicle-mounted HPC of the real vehicle, it is more realistic than pure automotive simulation software.

In one implementation, the method for simulating real-vehicle operation of the embodiment of the present disclosure includes step S101 to step S103, where step S101 of determining, by a vehicle-mounted HPC in response to a first interaction instruction sent by a first VR device, a driving scene to be fed back to a user by the first VR device includes:
determining, by the vehicle-mounted HPC in response to the first interaction instruction sent by the first VR device through a gateway, the driving scene to be fed back to the user by the first VR device.

The first VR device includes at least VR glasses.

According to embodiments of the present disclosure, it should be noted that: The VR glasses may be pre-configured with an interior environment of the vehicle, thereby enabling the user to send first interaction instructions for different driving scenes through the VR glasses.

The gateway is a gateway pre-configured for the vehicle-mounted HPC. By connecting to the gateway, a plurality of second VR devices for responding to the feedback information that meets the driving scene may be extended.

As shown in FIG. 2, the user generates the first interaction instruction through the first VR device worn, and the first interaction instruction is sent to the high-performance computing (vehicle-mounted HPC) through the pre-configured gateway, thereby achieving an interaction between the first VR device and the vehicle-mounted HPC.

According to the technique of the embodiments of the present disclosure, through the gateway, the interaction between the first VR device and the vehicle-mounted HPC can be achieved, and the extension of VR devices can be achieved to meet the requirements of real-vehicle operation for different driving scenes.

In one implementation, the method for simulating real-vehicle operation of the embodiment of the present disclosure includes step S101 to step S103, where step S103 of sending, by the vehicle-mounted HPC, a second interaction instruction to a corresponding second VR device according to a feedback manner and a feedback content of the feedback information includes:
step S1031: determining, by the vehicle-mounted HPC according to the feedback manner of the feedback information, a target vehicle-mounted device of the real vehicle that responds to the feedback information, where the target vehicle-mounted device includes at least one of a display, a seat, a rearview mirror, and a steering wheel, and the feedback manner includes at least one of image feedback, sound feedback, and somatosensory feedback;
step S1032: determining, by the vehicle-mounted HPC according to the target vehicle-mounted device, the corresponding second VR device to which the vehicle-mounted HPC is connected, where the second VR device includes at least one of VR glasses, VR gloves, a steering wheel, and a seat; and
step S1033: sending, by the vehicle-mounted HPC, the second interaction instruction to the second VR device according to the feedback content and the feedback manner of the feedback information.

According to embodiments of the present disclosure, it should be noted that: The VR glasses can implement a virtual environment of a real vehicle interior and a virtual environment of a real vehicle exterior that the user sees from the real vehicle interior. Through the VR glasses, the steering wheel, the instrument panel, the vehicle-mounted display screen, the head-up display, the windshield, the rearview mirror, and the like of the real vehicle can be seen. When the feedback information includes an image, the image may be virtually displayed on the windshield, the vehicle-mounted display screen, and the rearview mirror in the virtual environment of the vehicle interior through the VR glasses.

VR gloves can implement tactile feedback, for example, steering wheel vibration vehicle-mounted display screen vibration feedback, and the like. When the feedback information includes somatosensory feedback, vibration feedback of the steering wheel or vehicle-mounted display screen may be implemented through the VR gloves.

The steering wheel can implement vibration feedback of the real vehicle's steering wheel. When the feedback information includes somatosensory feedback, vibration feedback of the real vehicle's steering wheel can be implemented through the steering wheel.

The seat can implement vibration feedback of the real vehicle's seat and tightening of the real vehicle's seat belt. When the feedback information includes somatosensory feedback, somatosensory feedback of the real vehicle's seat and seat belt can be implemented through the seat.

According to the technique of the embodiments of the present disclosure, by matching different second VR devices based on the feedback manner and content of different feedback information, the user can experience a driving process of real-vehicle operation more realistically based on a plurality of second VR devices with different functions. Moreover, based on the use of the plurality of second VR devices, a closer match can be achieved between the driving scene of the real vehicle and the real-vehicle operation process that is based on the responses of a plurality of target vehicle-mounted devices.

In one implementation, the method for simulating real-vehicle operation of the embodiment of the present disclosure includes step S101 to step S103 and step S1031 to step S1033, where step S1032 of determining, by the vehicle-mounted HPC according to the target vehicle-mounted device, the corresponding second VR device to which the vehicle-mounted HPC is connected includes:
determining, by the vehicle-mounted HPC, extended VR devices to which the vehicle-mounted HPC is connected; and
determining, by the vehicle-mounted HPC, the second VR device corresponding to the target vehicle-mounted device from the extended VR devices according to a function of the target vehicle-mounted device and the feedback manner.

According to the technique of the embodiments of the present disclosure, a suitable extended VR device can be selected to simulate the feedback information corresponding to the driving scene of the real vehicle for the user, thereby providing the user with more realistic real-vehicle driving operation experience.

In one implementation, the method for simulating real-vehicle operation of the embodiment of the present disclosure includes step S101 to step S103 and step S1031 to step S1033, where step S1033 of sending, by the vehicle-mounted HPC, the second interaction instruction to the second VR device according to the feedback content and the feedback manner of the feedback information includes: sending, by the vehicle-mounted HPC, the second interaction instruction to the second VR device through a gateway according to the feedback content and the feedback manner of the feedback information.

As shown in FIG. 3, an embodiment of the present disclosure provides a method for simulating real-vehicle operation, including the following steps:
step S301: sending, by a first VR device, a first interaction instruction to a vehicle-mounted HPC, where the first interaction instruction is used to cause the vehicle-mounted HPC to determine, according to a driving scene corresponding to the first interaction instruction, feedback information to be generated in response to the driving scene;
step S302: simulating, by the first VR device according to a second interaction instruction sent by the vehicle-mounted HPC, real-vehicle operation for a user based on the driving scene, where the second interaction instruction is generated based on a feedback manner and a feedback content of the feedback information.

According to embodiments of the present disclosure, it should be noted that: The vehicle-mounted HPC in any embodiment of the present disclosure is physically mounted and used in a real vehicle. When it is mounted on the real vehicle, based on instructions of the user for the real vehicle, it can control the real vehicle to implement various vehicle functions. The implementable vehicle functions include, but are not limited to, controlling a vehicle-mounted display screen or head-up display to display images, controlling steering wheel vibration, controlling seat vibration and tightening a seat belt, and controlling the vehicle to implement an advanced driving assistance system (ADAS) function.

The first VR device may be understood as VR glasses, VR glasses and VR gloves, VR glasses and a control handle, and the like. By wearing the first VR device, the user can see a virtual scene of a vehicle interior and can send the first interaction instruction to the vehicle-mounted HPC through the first VR device. The user can send the first interaction instruction based on the first VR device through voice, button presses, head and eye gestures.

The driving scene may include various operations performed by the user on the vehicle interior while driving the real vehicle, for example, controlling the vehicle to use the vehicle-mounted display screen or head-up display for navigation, controlling the vehicle to perform autonomous driving, controlling the vehicle to perform assisted driving, and the like.

The feedback information may be understood as information displayed on a target vehicle-mounted device of the vehicle based on the driving scene during normal driving of the real vehicle. For example, when the driving scene is navigation, the feedback information includes a navigation scene presented on the vehicle-mounted display screen or head-up display (i.e., the target vehicle-mounted device) and a voice navigation sound emitted by the a vehicle-mounted sound system (i.e., the target vehicle-mounted device). When the driving scene is assisted driving, the feedback information includes navigation information and surrounding vehicle information presented on the vehicle-mounted display screen or head-up display, and further includes vibration feedback information of the steering wheel (i.e., the target vehicle-mounted device) or display information of a rearview mirror (i.e., the target vehicle-mounted device) when the user crosses a lane line. When the driving scene is a vehicle emergency braking scene, the feedback information includes brake warning information presented on the vehicle-mounted display screen or head-up display, and includes vibration information of the seat (i.e., the target vehicle-mounted device) or tightening information of the seat belt (i.e., the target vehicle-mounted device), or the like.

The feedback manner may be understood as a manner in which the target vehicle-mounted device responds to the feedback information. It includes, but is not limited to, image, sound, vibration, somatosensory feedback, and the like.

The feedback content may be understood as specific information displayed by the target vehicle-mounted device.

According to the technique of the embodiments of the present disclosure, by utilizing VR devices to interact with a vehicle-mounted HPC physically mounted on a real vehicle, a user is enabled to experience real-vehicle driving and riding operation, which is provided by the feedback information truly fed back by the vehicle-mounted HPC, with the aid of the VR devices even without driving the real vehicle. When automotive component suppliers have not yet completed the manufacturing of components or when vehicle OEMs have not yet produced vehicles, users can still experience real feedback from real components or vehicles in the earliest stage through interactions between VR devices and vehicle-mounted HPCs pre-installed in the components or vehicles. Thus, during demonstration of components or vehicle functions to the user, there is no need to place the large-sized components or vehicle on site. The components or vehicle functions can be demonstrated through the carried vehicle-mounted HPCs and the VR devices, thereby greatly reducing the costs of communication between the supplier or vehicle OEM and the user. Meanwhile, using VR devices as a medium for feeding back the feedback information by the real vehicle based on the driving scene enables the user to experience a response of the real vehicle to the driving scene, such that the user can experience a real vehicle driving process based on virtual reality and the real vehicle data fed back by the vehicle-mounted HPC.

In one example, if a customer needs to experience the effect of a pre-collision system of the vehicle, the first interaction instruction corresponding to the driving scene may be send to the vehicle-mounted HPC through the first VR device, and then the vehicle-mounted HPC sends the response feedback information to the second VR device, thereby enabling the user to experience, based on a plurality of different VR devices, a simulated real-vehicle operation process of the real vehicle for a pre-collision driving scene, such as alarm light flashing and alarm sound on the vehicle-mounted display screen, steering wheel vibration, or seat belt tightening. This allows the user to experience active safety functions of the vehicle without endangering their own safety. Moreover, since the user's experience originates directly from the vehicle-mounted HPC of the real vehicle, it is more realistic than pure automotive simulation software.

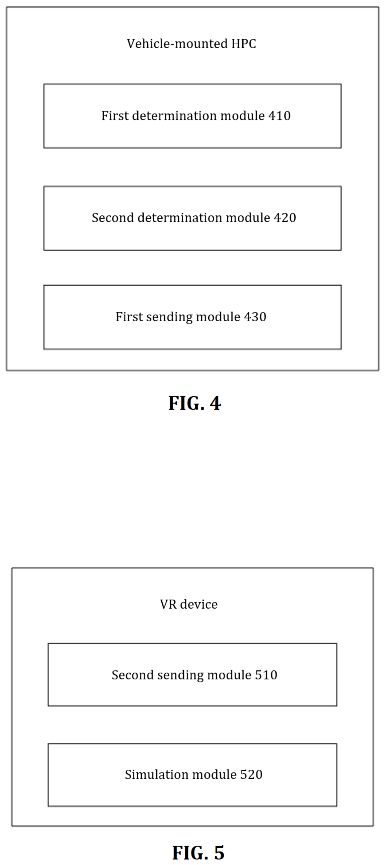

As shown in FIG. 4, an embodiment of the present disclosure provides a vehicle-mounted HPC, including:
a first determination module 410 configured to determine, in response to a first interaction instruction sent by a first VR device, a driving scene to be fed back to a user by the first VR device, where the vehicle-mounted HPC is configured to control operations of vehicle functions of a real vehicle on which the vehicle-mounted HPC is mounted;
a second determination module 420 configured to determine, according to the driving scene, feedback information to be generated in response to the driving scene; and
a first sending module 430 configured to send a second interaction instruction to a corresponding second VR device according to a feedback manner and a feedback content of the feedback information, where the second interaction instruction is used to control the second VR device to simulate real-vehicle operation for the user based on the driving scene, and the second VR device includes at least the first VR device.

In one implementation, the first determination module 410 is configured to: determine, in response to the first interaction instruction sent by the first VR device through a gateway, the driving scene to be fed back to the user by the first VR device.

The first VR device includes at least VR glasses.

In one implementation, the first sending module 430 includes:
a first determination sub-module configured to determine, according to the feedback manner of the feedback information, a target vehicle-mounted device of the real vehicle that responds to the feedback information, where the target vehicle-mounted device includes at least one of a display, a seat, a rearview mirror,
and a steering wheel, and the feedback manner includes at least one of image feedback, sound feedback, and somatosensory feedback;
a second determination sub-module configured to determine, according to the target vehicle-mounted device, the corresponding second VR device to which the vehicle-mounted HPC is connected, where the second VR device includes at least one of VR glasses, VR gloves, a steering wheel, and a seat; and
a sending sub-module configured to send the second interaction instruction to the second VR device according to the feedback content and the feedback manner of the feedback information.

In one implementation, the second determination sub-module is configured to:
determine extended VR devices to which it is connected; and
determine the second VR device corresponding to the target vehicle-mounted device from the extended VR devices according to a function of the target vehicle-mounted device and the feedback manner.

In one implementation, the sending sub-module is configured to:
send the second interaction instruction to the second VR device through a gateway according to the feedback content and the feedback manner of the feedback information.

For the description of specific functions and examples of various modules and sub-modules of an apparatus in the embodiment of the present disclosure, reference may be made to the relevant description of corresponding steps in the aforementioned method embodiments, which is no longer repeated herein.

As shown in FIG. 5, an embodiment of the present disclosure provides a VR device, including:
a second sending module 510 configured to send a first interaction instruction to a vehicle-mounted HPC, where the first interaction instruction is used to cause the vehicle-mounted HPC to determine, according to a driving scene corresponding to the first interaction instruction, feedback information to be generated in response to the driving scene; and
a simulation module 520 configured to simulate, according to a second interaction instruction sent by the vehicle-mounted HPC, real-vehicle operation for a user based on the driving scene, where the second interaction instruction is generated based on a feedback manner and a feedback content of the feedback information.

For the description of specific functions and examples of various modules and sub-modules of an apparatus in the embodiment of the present disclosure, reference may be made to the relevant description of corresponding steps in the aforementioned method embodiments, which is no longer repeated herein.

In the technical solution of the present disclosure, the acquisition, storage, application, and the like of user personal information involved all comply with the provisions of relevant laws and regulations and do not violate public order and good morals.

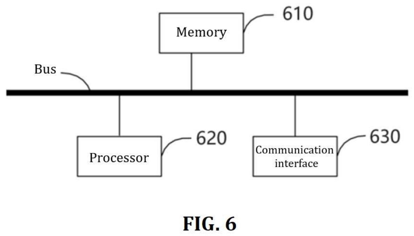

FIG. 6 is a structural block diagram of an electronic device according to an embodiment of the present disclosure. As shown in FIG. 6, the electronic device includes a memory 610 and a processor 620, where the memory 610 stores a computer program that can be run on the processor 620. The numbers of memories 610 and processors 620 may be one or more. The memory 610 may store one or more computer programs that, when executed by the electronic device, cause the electronic device to execute the methods provided in the aforementioned method embodiments. The electronic device may further include a communication interface 630 configured to communicate with an external device, so as to perform data exchange transmission.

If the memory 610, the processor 620, and the communication interface 630 are implemented independently, the memory 610, the processor 620, and the communication interface 630 may be connected to and communicate with each other via a bus. The bus may be an industry standard architecture (ISA) bus, a peripheral component interconnect (PCI) bus, an extended industry standard architecture (EISA) bus, or the like. The bus may be classified into an address bus, a data bus, a control bus, and the like. For ease of representation, only one thick line is used for representation in FIG. 6, but this does not mean that there is only one bus or one type of bus.

Optionally, in specific implementations, if the memory 610, the processor 620, and the communication interface 630 are integrated on one chip, the memory 610, the processor 620, and the communication interface 630 may communicate with each other through an internal interface.

It is to be understood that the aforementioned processor may be a central processing unit (CPU), or may be other general-purpose processors, a digital signal processor (DSP), an application-specific integrated circuit (ASIC), a field programmable gate array (FPGA), or other programmable logic devices, discrete gates or transistor logic devices, discrete hardware components, or the like. A general purpose processor may be a microprocessor, any conventional processor, or the like. It is worth noting that the processor may be a processor supporting an advanced RISC machines (ARM) architecture.

Further, optionally, the aforementioned memory may include a read-only memory and a random access memory, and may also include a nonvolatile random access memory. The memory may be a volatile memory or nonvolatile memory, or may include both volatile and nonvolatile memories. The nonvolatile memory may include a read-only memory (ROM), a programmable ROM (PROM), an erasable PROM (EPROM), an electrically EPROM (EEPROM), or a flash memory. The volatile memory may include a random access memory (RAM), which serves as an external cache. By way of example but not limiting description, many forms of RAM are available, for example, a static RAM (SRAM), a dynamic random access memory (DRAM), a synchronous DRAM (SDRAM), a double data rate SDRAM (DDR SDRAM), an enhanced SDRAM (ESDRAM), a synchlink DRAM (SLDRAM), and a direct RAMBUS RAM (DR RAM).

In the aforementioned embodiments, implementation may be achieved entirely or partially through software, hardware, firmware, or any combination thereof. When implementation is achieved with software, it may be achieved entirely or partially in the form of a computer program product. The computer program product includes one or more computer instructions. When the computer instructions are loaded and executed on a computer, the processes or functions in accordance with the embodiments of the present disclosure are entirely or partially generated. The computer may be a general-purpose computer, a special-purpose computer, a computer network, or other programmable apparatuses. The computer instructions may be stored in a computer-readable storage medium or transmitted from one computer-readable storage medium to another computer-readable storage medium. For example, the computer instructions may be transmitted from one website, computer, server, or data center to another website, computer, server, or data center by wired means (e.g., coaxial cable, optical fiber, digital subscriber line (DSL), and the like) or wireless means (e.g., infrared, Bluetooth, microwave, and the like). The computer-readable storage medium may be any available medium that can be accessed by a computer, or a data storage device such as a server or data center that integrates one or more available media. The available medium may be a magnetic medium (e.g., a floppy disk, a hard disk, or a magnetic tape), an optical medium (e.g., a digital versatile disc (DVD)), a semiconductor medium (e.g., a solid state disk (SSD)), or the like. It is worth noting that the computer-readable storage medium mentioned in the present disclosure may be a nonvolatile storage medium. In other words, it may be a non-transitory storage medium.

Those skilled in the art may understand that all or part of the steps of implementing the aforementioned embodiments may be accomplished by hardware, or by a program instructing relevant hardware, and the program may be stored in a computer-readable storage medium. The storage medium mentioned above may be a read-only memory, a disk, an optical disk, or the like.

In the description of the embodiments of the present disclosure, the description with reference to terms such as "one embodiment", "some embodiments", "example", "specific example", or "some examples" means that specific features, structures, materials, or characteristics described in combination with the embodiment or example are included in at least one embodiment or example of the present disclosure. Moreover, the specific features, structures, materials, or characteristics described may be incorporated in an appropriate manner in any one or more embodiments or examples. In addition, those skilled in the art may incorporate and combine different embodiments or examples as well as features of different embodiments or examples described in this specification without mutual contradiction.

In the description of the embodiments of the present disclosure, unless otherwise specified, "/" represents the meaning of "or". For example, A/B may represent A or B. "And/or" herein is merely a way to describe an association relationship between associated objects, indicating that there may be three relationships. For example, A and/or B may indicate three cases: A exists alone, both A and B exist, and B exists alone.

In the description of the embodiments of the present disclosure, the terms "first" and "second" are used for descriptive purpose only and should not be understood as indicating or implying relative importance or implicitly indicating the number of the indicated technical features. Therefore, a feature defined with "first" or "second" may explicitly or implicitly include one or more of such features. In the description of the embodiments of the present disclosure, unless otherwise specified, "a plurality of" means two or more.

The above descriptions are merely exemplary embodiments of the present disclosure and are not intended to limit the present disclosure. Any modifications, equivalent substitutions, improvements, or the like made within the spirit and principles of the present disclosure shall be included in the scope of protection of the present disclosure.

## Claims

1. A method for simulating real-vehicle operation, comprising:
determining (S101), by a vehicle-mounted HPC in response to a first interaction instruction sent by a first VR device, a driving scene to be fed back to a user by the first VR device, wherein the vehicle-mounted HPC is configured to control operations of vehicle functions of a real vehicle on which the vehicle-mounted HPC is mounted;
determining (S102), by the vehicle-mounted HPC according to the driving scene, feedback information to be generated in response to the driving scene; and
sending (S103), by the vehicle-mounted HPC, a second interaction instruction to a corresponding second VR device according to a feedback manner and a feedback content of the feedback information, wherein the second interaction instruction is used to control the second VR device to simulate real-vehicle operation for the user based on the driving scene, and the second VR device comprises at least the first VR device.

2. The method according to claim 1, wherein determining (S101), by a vehicle-mounted HPC in response to a first interaction instruction sent by a first VR device, a driving scene to be fed back to a user by the first VR device comprises:
determining, by the vehicle-mounted HPC in response to the first interaction instruction sent by the first VR device through a gateway, the driving scene to be fed back to the user by the first VR device;
wherein the first VR device comprises at least VR glasses.

3. The method according to claim 1 or 2, wherein sending (103), by the vehicle-mounted HPC, a second interaction instruction to a corresponding second VR device according to a feedback manner and a feedback content of the feedback information comprises:
determining (S1031), by the vehicle-mounted HPC according to the feedback manner of the feedback information, a target vehicle-mounted device of the real vehicle that responds to the feedback information, wherein the target vehicle-mounted device comprises at least one of a display, a seat, a rearview mirror, and a steering wheel, and the feedback manner comprises at least one of image feedback, sound feedback, and somatosensory feedback;
determining (S1032), by the vehicle-mounted HPC according to the target vehicle-mounted device, the corresponding second VR device to which the vehicle-mounted HPC is connected, wherein the second VR device comprises at least one of VR glasses, VR gloves, a steering wheel, and a seat; and
sending (S1033), by the vehicle-mounted HPC, the second interaction instruction to the second VR device according to the feedback content and the feedback manner of the feedback information.

4. The method according to claim 3, wherein determining (S1032), by the vehicle-mounted HPC according to the target vehicle-mounted device, the corresponding second VR device to which the vehicle-mounted HPC is connected comprises:
determining, by the vehicle-mounted HPC, extended VR devices to which the vehicle-mounted HPC is connected; and
determining, by the vehicle-mounted HPC, the second VR device corresponding to the target vehicle-mounted device from the extended VR devices according to a function of the target vehicle-mounted device and the feedback manner.

5. The method according to claim 3, wherein sending (S1033), by the vehicle-mounted HPC, the second interaction instruction to the second VR device according to the feedback content and the feedback manner of the feedback information comprises:
sending, by the vehicle-mounted HPC, the second interaction instruction to the second VR device through a gateway according to the feedback content and the feedback manner of the feedback information.

6. A method for simulating real-vehicle operation, comprising:
sending (S301), by a first VR device, a first interaction instruction to a vehicle-mounted HPC, wherein the first interaction instruction is used to cause the vehicle-mounted HPC to determine, according to a driving scene corresponding to the first interaction instruction, feedback information to be generated in response to the driving scene; and
simulating (S302), by the first VR device according to a second interaction instruction sent by the vehicle-mounted HPC, real-vehicle operation for a user based on the driving scene, wherein the second interaction instruction is generated based on a feedback manner and a feedback content of the feedback information.

7. A vehicle-mounted HPC, comprising:
a first determination module (410) configured to determine, in response to a first interaction instruction sent by a first VR device, a driving scene to be fed back to a user by the first VR device, wherein the vehicle-mounted HPC is configured to control operations of vehicle functions of a real vehicle on which the vehicle-mounted HPC is mounted;
a second determination module (420) configured to determine, according to the driving scene, feedback information to be generated in response to the driving scene; and
a first sending module (430) configured to send a second interaction instruction to a corresponding second VR device according to a feedback manner and a feedback content of the feedback information, wherein the second interaction instruction is used to control the second VR device to simulate real-vehicle operation for the user based on the driving scene, and the second VR device comprises at least the first VR device.

8. A VR device, comprising:
a second sending module (510) configured to send a first interaction instruction to a vehicle-mounted HPC, wherein the first interaction instruction is used to cause the vehicle-mounted HPC to determine, according to a driving scene corresponding to the first interaction instruction, feedback information to be generated in response to the driving scene; and
a simulation module (520) configured to simulate, according to a second interaction instruction sent by the vehicle-mounted HPC, real-vehicle operation for a user based on the driving scene, wherein the second interaction instruction is generated based on a feedback manner and a feedback content of the feedback information.

9. An electronic device, comprising:
at least one processor (620); and
a memory (610) communicatively connected to the at least one processor, wherein
the memory stores instructions executable by the at least one processor, wherein
the instructions, when executed by the at least one processor, enable the at least one processor to perform the method according to any one of claims 1 to 6.

10. A non-transitory computer-readable storage medium storing computer instructions, wherein the computer instructions are used to enable the computer to perform the method according to any one of claims 1 to 6.

11. A computer program product, comprising a computer program, wherein the computer program, when executed by a processor, implements the method according to any one of claims 1 to 6.
